# EUROPÄISCHE PATENTSCHRIFT

(11) **EP 3 498 110 B1**
(45) Veröffentlichungstag und Bekanntmachung des Hinweises auf die Patenterteilung: **29.04.2026**
(21) Anmeldenummer: 18211868.7
(22) Anmeldetag: 12.12.2018
(51) Int. Cl.: A23N 12/08, A23N 12/12, A23L 5/10, A23L 25/00

(54) **WÄRMEBEHANDLUNG VON STÜCKIGEN LEBENSMITTELPRODUKTEN**
THERMAL TREATMENT OF INDIVIDUAL FOOD PRODUCTS
TRAITEMENT THERMIQUE DES PRODUITS ALIMENTAIRES EN MORCEAUX

(30) Priorität: 14.12.2017 DE 102017222737
(43) Veröffentlichungstag der Anmeldung: 19.06.2019
(73) Patentinhaber: Bühler AG, 9240 Uzwil (CH)
(72) Erfinder: Lohmüller, Tobias, 71691 Freiberg (DE)
(74) Vertreter: Vossius & Partner Patentanwälte Rechtsanwälte mbB

(56) Entgegenhaltungen:
- EP-A1- 3 207 806
- US-A1- 2009 211 274
- IAN KEMP: "HUMIDITY EFFECTS IN SOLIDS DRYING PROCESSES", 1 January 2007 (2007-01-01), XP55753402, Retrieved from the Internet <URL:https://journals.sagepub.com/doi/pdf/10.1177/002029400704000901> [retrieved on 20201124]
- TRABELSI S ET AL: "Nondestructive sensing of bulk density and moisture content in shelled peanuts from microwave permittivity measurements", FOOD CONTROL, BUTTERWORTH, LONDON, GB, vol. 17, no. 4, 1 April 2006 (2006-04-01), pages 304 - 311, XP024961705, ISSN: 0956-7135, [retrieved on 20060401], DOI: 10.1016/J.FOODCONT.2004.11.004
- GARCIA-ALAMILLA ET AL: "Moisture, acidity and temperature evolution during cacao drying", JOURNAL OF FOOD ENGINEERING, BARKING, ESSEX, GB, vol. 79, no. 4, 15 November 2006 (2006-11-15), pages 1159 - 1165, XP005728365, ISSN: 0260-8774, DOI: 10.1016/J.JFOODENG.2006.04.005
- S. CHEMKHI ET AL: "Modelling and simulation of drying phenomena with rheological behaviour", BRAZILIAN JOURNAL OF CHEMICAL ENGINEERING, vol. 22, no. 2, 1 June 2005 (2005-06-01), pages 153 - 163, XP055578983, ISSN: 0102-2687, DOI: 10.1590/S0104-66322005000200001
- CAMERON KELLY ET AL: "The Coffee Roaster's Paradox", 8 December 2017 (2017-12-08), XP055577261, Retrieved from the Internet <URL:https://researchcommons.waikato.ac.nz/bitstream/handle/10289/11551/TheCoffeeRoastersParadox_KellyScott_ENZCon2017_paper_22.pdf?sequence=2&isAllowed=y> [retrieved on 20190403]

## Beschreibung

Die vorliegende Erfindung betrifft ein Verfahren zum Durchführen einer Wärmebehandlung von stückigen Lebensmitteln, insbesondere das Rösten von Kakao, Nüssen, Kaffee, Getreide oder Ölsaaten. Der Umfang der Erfindung ist durch die Ansprüche definiert.

Bei der Verarbeitung von Lebensmitteln, die in stückiger Form vorliegen, beispielsweise Kaffeebohnen, Kakaobohnen, Samen und Nüssen, spielen verschiedene Arten von Wärmebehandlungen eine wichtige Rolle, insbesondere beispielsweise das Trocknen, das Rösten oder Verfahren zur Haltbarmachung wie Sterilisation oder Pasteurisation derartiger Lebensmittel.

Während der Wärmebehandlung befinden sich die Lebensmittel in der Regel in einer Behandlungskammer, beispielsweise einer Behandlungstrommel. Durch Zuführen von Wärme, beispielsweise durch Einbringen von warmer oder heißer Luft in die Behandlungskammer oder alternativ bzw. gleichzeitig Erwärmen der Behandlungskammer von außen, wird die Wärme in das Stückgut eingebracht. Hierbei werden Anstrengungen unternommen, um die Wärmeeinwirkung möglichst gleichmäßig über die im gesamten Volumen der Behandlungskammer befindlichen Lebensmittel zu verteilen. Dies geschieht bei einer vorher genau festgelegten Temperatur oder einer Sequenz von unterschiedlichen Temperaturen bei mehrstufigen Behandlungsprozessen. Zusätzlich wird die Zeit der Wärmeeinwirkung gesteuert.

Ein Verfahren zum Rösten von Kaffeebohnen ist beispielsweise aus der WO 2015/110337 A1 bekannt. Verfahren zum Trocknen von Pasta sind aus der WO 2009/150192 A2 oder der WO 2010/108806 bekannt. Verfahren und Einrichtungen zum Trocknen von Reis werden beispielsweise in der WO 2007/065279 A1 und der WO 2005/017431 A1 beschrieben.

Den bisher bekannten Verfahren zur Wärmebehandlung ist gemeinsam, dass die Feuchtigkeitsverteilung innerhalb der einzelnen Lebensmittelprodukte nicht gesteuert werden kann. So ergibt sich im Verlauf der bisher verwendeten Verfahren zwangsläufig, dass die Feuchtigkeit während der Wärmebehandlung zunächst an der Oberfläche der Produkte abnimmt und somit die Feuchtigkeit innerhalb der Produkte in Richtung des Produktkerns zunimmt. Die Feuchtigkeitsverteilung innerhalb des Produkts hat aber, im Zusammenspiel mit der jeweils herrschenden Temperatur, einen großen Einfluss sowohl auf die Geschmacksentwicklung, auf intrazelluläre Strukturen, die beispielsweise mit der Haltbarkeit des Produktes korrelieren, und auf morphologische Änderungen des Produkts.

Trabelsi S. et at: "Nondestructive sensing of bulk density and moisture content in shelled peanuts from microwave permittivity measurements", Food Control, Butterworth, London, GB, Bd. 17, Nr. 4, 1. April 2006. Seiten 304-311 beschreiben die Benutzung dielektrischbasierter Verfahren zur nicht-zerstörenden und gleichzeitigen Bestimmung der Schüttdichte und des Feuchtigkeitsgehalts von geschälten Erdnüssen.

Garcia-Alamilla er at: "Moisture, acidity, and temperature evolution during cacao drying", Journal of Food Engineering, Barking, Essex, GB, Bd. 79, Nr. 4, 15. November 2006, Seiten 1159-1165 beschreiben eine Abschätzung der theoretischen Feuchtigkeits- und Temperaturentwicklung während einer Festbetttrocknung von Kakao.

Chmenki S. et al: "Modelling and simulation of drying behavior phenomena with rheological behavior" beschreiben eine Modellierung des Wasserverlustes während der Trocknung von Lebensmitteln.

US 2009/0211274 A1 beschreibt Verfahren und Vorrichtungen zur Vorbehandlung frischer Lebensmittel.

Kemp, Ian C.: "Humidity effects in solids drying processes", https://journals.sagepub.com/doi/pdf/10.1177/002029400704000901, 1. Januar 2007 berichtet über Messungen der Feuchtigkeit in Tocknungsprozessen.

Es ist somit eine Aufgabe der Erfindung, ein Verfahren zur Wärmebehandlung von stückigen Lebensmittelprodukten bereitzustellen, das eine verbesserte Kontrolle und Steuerung der Wärmebehandlung und insbesondere der Wärme- und Feuchtigkeitsverteilung und des Feuchtigkeitsentzugs während der Wärmebehandlung ermöglicht.

Diese Aufgabe wird mit den Merkmalen der Ansprüche gelöst.

Es ist eine Grundidee der vorliegenden Erfindung, bei der Durchführung einer Wärmebehandlung, nämlich des Röstens der Lebensmittelprodukte bei einer vorbestimmten Temperatur den Wasser-Partialdruck in der Atmosphäre, in der sich die Lebensmittelprodukte während der Wärmebehandlung befinden, zu steuern. Insbesondere soll durch die Einstellung des Wasser-Partialdrucks erreicht werden, dass die Feuchtigkeitsverteilung innerhalb der individuellen Lebensmittelprodukte während der Wärmebehandlung homogen ist.

Bei der Wärmebehandlung handelt es sich um eine Röstung. Je nach der Art der Wärmebehandlung werden die verwendete Temperatur und die Zeitdauer der Wärmebehandlung entsprechend gewählt. Beispielsweise wird die Röstung von Haselnüssen bei etwa 130 °C durchgeführt. Die Temperatur kann aber, beispielsweise beim Rösten von Getreide, auch bis zu oder sogar über 230 °C betragen. Desweiteren gibt es in Prozessen oftmals die Zielsetzung, das Produkt ohne Trocknungseffekte schnell auf eine Zieltemperatur zu bringen. So soll bei einer Pasteurisierung schnell eine Temperatur von etwa 95 ± 5 °C erreicht werden, bevor eine Verdampfung stattfindet. Um die Vorwärmung schnellstmöglich zu erreichen, kann Feuchte in die Warmluft hinzugegeben werden, so dass der Taupunkt der Luft während der Aufwärmphase auf z.B. 65 ± 5 °C sowie 95 ± 5 °C eingestellt wird. Diese Einstellung verhindert das Trocknen der Produkte, da der Wasserpartialdruck in dieser Phase zu gering ist, um eine Trocknung zu induzieren, aber ein hoher Energietransfer ermöglicht wird. Dadurch kann ein Geschwindigkeitsgewinn bei gleichbleibender Produktinnenfeuchte von mindestes einem Faktor 2 erzielt werden.

Um die Ausbildung einer homogenen Feuchtigkeitsverteilung innerhalb der Lebensmittelprodukte zu erreichen, wird gemäß der Erfindung der Wasser-Partialdruck derart eingestellt, dass während der Wärmebehandlung ein Entweichen von Feuchtigkeit aus den Lebensmittelprodukten vermieden wird. Dies geschieht dadurch, dass die Feuchtigkeit des Stückguts während der Behandlung regelmäßig oder kontinuierlich bestimmt wird, beispielsweise, wie unten näher beschrieben, durch eine direkte Messung oder indirekt, beispielsweise durch Vergleich der Feuchtigkeit von Zu- und Abluft in bzw. aus der Behandlungskammer. Nimmt die Feuchtigkeit des zu behandelnden Produkts ab, so wird die Feuchtigkeit, und damit der Wasser-Partialdruck in der Behandlungskammer erhöht, womit eine weitere Verminderung der Feuchtigkeit der Produkte vermieden wird.

So kann erreicht werden, dass die anfänglich homogene Feuchtigkeitsverteilung auch beibehalten wird, während sich die einzelnen Lebensmittelprodukte erwärmen. Die Wärmebehandlung, also insbesondere eine Röstung oder ein thermaler Prozess der Morphologie-Änderung, kann somit stattfinden, wenn sich die Verteilung sowohl der Temperatur als auch der Feuchtigkeit innerhalb des Produkts homogen ausgebildet hat. Nach Erreichen eines solchen Zustands erfolgt das Einwirken der Reaktion gleichmäßig über das ganze Lebensmittelprodukt für die gesamte Zeitdauer der Wärmebehandlung bei genau definierter Feuchtigkeit. So kann beispielsweise eine Trocknung gezielt gestartet werden. Wenn insbesondere eine Trocknung beim Erreichen der Glasübergangstemperatur des Produkts gestartet wird, kann die Feuchtigkeit der Produkte schneller ohne Zerstörung der intrazellularen Strukturen entfernt werden. Auch kann, im Falle einer Röstung, die Rösttemperatur bei der Zielfeuchtigkeit im gesamten Lebensmittelprodukt für die gewünschte Zeitdauer einwirken. Auch kann im Falle einer kritischen Phase der morphologischen Änderung dieser Zustand besser kontrolliert werden, da ein einheitlicher Feuchtegehalt eingestellt werden kann.

Die Einstellung des Wasser-Partialdrucks geschieht beispielsweise auf der Basis einer Messung der relativen Luftfeuchtigkeit der das Gut in der Behandlungskammer umgebenden Atmosphäre. Diese kann direkt innerhalb der Behandlungskammer erfolgen oder indirekt durch Messen der Feuchtigkeit der Zuluft eines Warmluftstroms in die Behandlungskammer, mit dem die Temperatur während der Wärmebehandlung eingestellt werden kann, und/oder der Abluft aus der Behandlungskammer. Die Einstellung des Wasser-Partialdrucks kann durch gezielte Zugabe von Dampf in die Atmosphäre, beispielsweise durch Zugabe in den Warmluftstrom erfolgen.

Weiterhin kann die Einstellung des Wasser-Partialdrucks auf der Basis einer Bestimmung des Feuchtigkeitsgehalts der Lebensmittelprodukte erfolgen. Auch kann eine Messung der Dichte bzw. Dichteänderung der Lebensmittelprodukte erfolgen. Mit dem kommerziell unter dem Namen HydroKen^{™} erhältlichen Produkt ist beispielsweise eine Messung von Dichte und Feuchtigkeit unter Verwendung von Mikrowellenstrahlung möglich. Auch ist die Verwendung kapazitiver Sensoren zur Messung der Feuchtigkeit möglich. Eine direkte Messung der Feuchtigkeit kann beispielweise auch mittels NIR-Strahlung erfolgen.

Bei bestimmten Arten der Wärmebehandlung kann die Wahl der Taupunkttemperatur während der Wärmebehandlung vorteilhaft sein. Um eine bestimmte Produkttemperatur ohne Feuchtigkeitsverlust präzise und schnell einstellen zu können, beispielsweise für die Pasteurisierung der Lebensmittelprodukte, kann die Atmosphäre derart gewählt werden, dass die Taupunkttemperatur die gewünschte Vorwärmtemperatur für die Pasteurisierungstemperatur ist. Durch den hohen Energieeintrag aufgrund der feucht-warmen Atmosphäre bei Nutzung des Taupunktes ist es möglich, dass während der Wärmebehandlung die Zieltemperatur für das gesamte Lebensmittelprodukt garantiert erreicht ist, so dass eine Behandlung, wie z.B. die der Pasteurisierung, bei der gewünschten Temperatur sichergestellt ist.

Weiterhin kann die Wahl der Glasübergangstemperatur, also der Temperatur, bei der das Stückgut von einem spröden in einen viskoelastischen Zustand übergeht, vorteilhaft sein. Durch die feucht-warme Atmosphäre kann die Gut-Trocknung vermieden und die Glasübergangstemperatur durch die erhöhte Energiedichte schneller erreicht werden. Nach Erreichen der Glasübergangstemperatur kann eine Trocknung durchgeführt werden, die eine intrazelluläre Zerstörung minimiert, was zu einer erhöhten Haltbarkeit von z.B. einer Nuss führt oder eine Fettmigration aus der Nuss in der Schokolade verringert.

Oft schließt sich an die Wärmebehandlung, insbesondere die Röstung der Lebensmittelprodukte, eine Trocknung an. Bei dieser Trocknung kann dann der Wasser-Partialdruck in der Atmosphäre gesenkt werden, um eine gleichmäßige Trocknung der Produkte sicherzustellen. Im Falle der Wahl einer Temperatur bei oder über der Glasübergangstemperatur ermöglicht die "poröse" Struktur der Produkte eine schnelle Trocknung aufgrund der erhöhten Wasser-Durchlässigkeit, ohne die Struktur des Produkts zu schädigen.

Die vorliegende Erfindung wird im Folgenden unter Verweis auf die Figuren näher dargestellt, wobei
- Fig. 1: schematisch die Verteilung von Feuchtigkeit und Temperatur innerhalb einer Kakaobohne während einer herkömmlichen Röstung (A) und während einer Röstung gemäß einer Ausführungsform der Erfindung (B) zeigt;
- Fig. 2: schematisch den Verlauf der Glasübergangstemperatur T_{g} in Abhänigkeit der Feuchtigkeit zeigt,
- Fig. 3: den zeitlichen Verlauf der Feuchtigkeit beim Rösten und Trocknen mit herkömmlichen Verfahren und einem erfindungsgemäßen Verfahren zeigt,
- Fig. 4: den zeitlichen Verlauf der Feuchtigkeit beim Rösten nach anfänglichem Trocknen und einer Haltezeit bei einer gezielt ausgewählten konstanten Temperatur mit einem erfindungsgemäßen Verfahren im Vergleich mit einem herkömmlichen Verfahren zeigt und
- Fig. 5: den Ertragsgewinn bei einer Röstung mit einem erfindungsgemäßen Verfahren mit Dichtemessung illustriert.

Es ist bekannt, dass die Auswirkungen einer Wärmeeinwirkung insbesonders auf stückige Lebensmittel nicht nur von der Temperatur in den einzelnen Lebensmittelprodukten und der Zeit abhängen, während der diese Temperatur einwirkt, sondern auch mit der Feuchtigkeit der Produkte zusammenhängen und durch diese beeinflusst werden. Während bisherige Verfahren darauf abzielen, eine möglichst homogene Temperatur sowohl in der für die Wärmebehandlung vorgesehenen Behandlungskammer insgesamt und auch innerhalb der individuellen Lebensmittelstücke zu erreichen, ist es mit den bisherigen Verfahren nicht möglich, die Feuchtigkeitsverteilung innerhalb der Stückgüter einzustellen. Das Ergebnis der Wärmebehandlung hängt aber empfindlich von der während der Wärmebehandlung herrschenden Feuchtigkeit ab. Daher sollte sichergestellt sein, dass innerhalb des Lebensmittels die erforderliche Temperatur für die gewünschte Zeit bei einer genau definierten Feuchtigkeit einwirken kann.

Die vorliegende Erfindung ermöglicht das Erreichen einer homogenen Feuchtigkeitsverteilung innerhalb der einzelnen Lebensmittelprodukte.

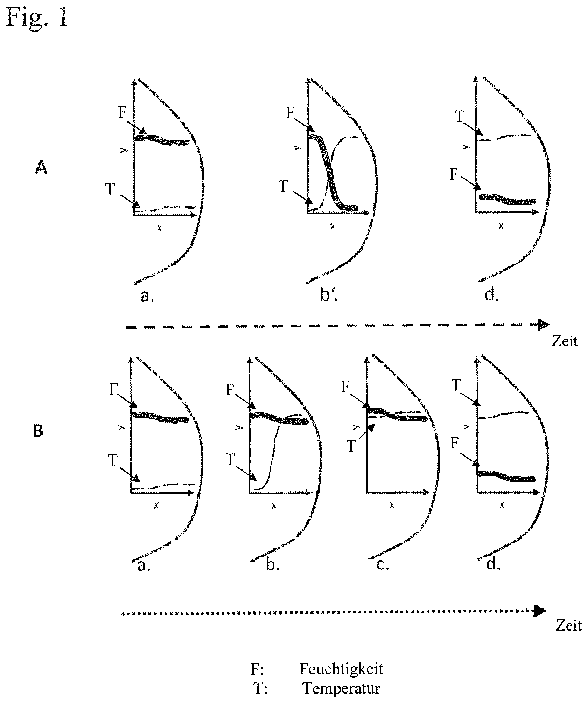

In Figur 1 ist dies am Beispiel des Röstens einer Kakaobohne schematisch gezeigt.

In Figur 1A wird die Verteilung der Temperatur und der relativen Feuchtigkeit innerhalb einer schematisch dargestellten Kakaobohne im Verlauf eines Röstverfahrens gezeigt, wobei Fig. 1A-a die Situation des Ausgangsprodukts darstellt. Innerhalb der Kakaobohne herrschen eine im Wesentlichen homogene Temperaturverteilung, die Lagertemperatur des Ausgangsprodukts, und eine homogene Feuchtigkeit von beispielsweise etwa 7%. Während einer konvektiven und/oder konduktiven Röstung (Fig. 1A-b') wird der Kakaobohne an der Oberfläche Wärme zugeführt, was zwangsläufig zu einer Erhöhung der Temperatur an der Oberfläche der Kakaobohne führt. Gleichzeitig wird dort, wo die Temperatur zunächst erhöht wird, die Feuchtigkeit abnehmen, was im Inneren der Kakaobohne erst dann stattfinden wird, wenn die Temperatur auch dort über die Zeit zugenommen hat (Fig. 1A-d). Im Ergebnis stellt sich also am Ende der Röstung die gewünschte niedrige Feuchtigkeit innerhalb der gesamten Kakaobohne von beispielsweise 2% ein, und auch die Temperaturverteilung ist innerhalb der Kakaobohne homogen bei der gewünschten Rösttemperatur. Es ist aber ersichtlich, dass während des Verlaufs und gerade zu Beginn der Röstung im Inneren der Kakaobohne Zustände herrschen, die sich von der Oberfläche zum Kern wesentlich unterscheiden und somit nicht sichergestellt werden kann, dass bei der Röstung gleiche Ergebnisse über das gesamte Volumen der Kakaobohne erreicht werden können.

In Fig. 1B ist der entsprechende Verlauf bei Anwendung des erfindungsgemäßen Verfahrens gezeigt. Ausgehend von den gleichen Anfangsbedingungen (Fig. 1B-a) wird wieder die Temperatur in der Behandlungskammer erhöht, so dass sich wieder zunächst die Temperatur an der Oberfläche der Kakaobohne erhöht (Fig. 1B-b). Durch die Einstellung des Wasser-Partialdrucks gemäß dem erfindungsgemäßen Verfahren wird aber sichergestellt, dass während dieser Aufwärmphase kein Wasser aus dem Produkt austritt, so dass die Feuchtigkeit innerhalb der Kakaobohne auf dem anfänglichen Niveau konstant über das Volumen der Kakaobohne bei beispielsweise etwa 7% verbleibt. Erst wenn die gewünschte Temperatur innerhalb der gesamten Kakaobohne erreicht ist und für die gewünschte Zeit der Wärmebehandlung, z. B. der Röstung, aufrechterhalten bleibt (Fig. 1B-c), ist sichergestellt, dass die Temperatureinwirkung bei einer genau definierten Feuchtigkeit durch die gesamte Kakaobohne hindurch stattgefunden hat. Erst dann wird die Trocknung der Kakaobohne begonnen, wobei die Feuchtigkeit gleichförmig über das gesamte Volumen der Kakaobohne abnimmt, bis der gewünschte Endzustand (Fig. 1B-d) erreicht ist. Während der Röstung und zu Beginn der Trocknung (Fig. 1B-c) liegt die Temperatur beispielsweise homogen über die gesamte Bohne bei etwa 120° C und die Feuchtigkeit homogen bei beispielsweise 7%.

Um zu erreichen, dass der Wasser-Partialdruck geeignet eingestellt ist, kann die Feuchtigkeit innerhalb der Behandlungskammer überwacht werden und auf der Basis dieser Messungen gegebenenfalls zusätzlicher Dampf in die Atmosphäre innerhalb der Behandlungskammer eingeführt werden. Die Überwachung der Feuchtigkeit innerhalb der Behandlungskammer kann beispielsweise durch die Messung der Feuchtigkeit der im Fall einer konvektiven Wärmebehandlung eingebrachten Warmluft und/oder die Messung der Feuchtigkeit der Abluft überwacht werden. Auch ist eine direkte Messung der Feuchtigkeit innerhalb der Behandlungskammer möglich.

Alternativ oder zusätzlich kann auch die Dichte bzw. die Dichteänderung der zu behandelnden Produkte überwacht werden, was beispielsweise unter Verwendung von Mikrowellen möglich ist. Die Feuchtigkeit innerhalb der Produkte kann auch direkt gemessen werden.

Eine Steuerung des Wasser-Partialdrucks ist auch empirisch möglich, indem durch entsprechende Versuchsreihen festgestellt wird, wie die Dampfzufuhr bei welchen Temperaturen im Verlauf des Verfahrens eingestellt werden muss, um das erwünschte Ergebnis zu erzielen.

Bei der zuvor beispielhaft für Kakaobohnen näher beschriebenen Röstung die ebenso bei der Verarbeitung von Kaffee, Nüssen oder Getreide eingesetzt werden kann, ermöglicht das erfindungsgemäße Verfahren das gezielte Einstellen von Temperatur und Feuchtigkeit innerhalb der zu behandelnden Produkte, die dann für eine bestimmte Zeit sicher bei den gewählten Werten aufrecht erhalten werden können. Die bei der Röstung auftretenden Maillard-Reaktionen, die unter anderem für die Geschmacks- und Farbentwicklung verantwortlich sind, können nur gezielt gesteuert werden, wenn die Feuchtigkeit, der morphologische Status und die Homogenität des Produkts in Bezug auf Feuchtigkeit und Temperatur genau kontrolliert werden können, was durch das Verfahren der Erfindung ermöglicht wird. Um den erwünschten homogenen Status in den Produkten erzeugen zu können, ist, wie oben beschrieben, eine Wasserdampf-/Wasser-Injektion in einen Warmluftstrom, durch den das Innere der Behandlungskammer erwärmt wird, oder in den von außen beheizten "geschlossenen Raum" der Behandlungskammer, vorgesehen. Hierdurch kann die Wärmebehandlung im gesamten Gut kontrolliert und währenddessen der homogene Status aufrecht erhalten werden. Das Aufheizen des Gutes ist mit gezieltem Feuchtigkeitsverlust möglich. Nach Erreichen der Zieltemperatur von beispielsweise etwa 120°C kann dann die Gut-Feuchte von beispielsweise 5% gezielt für beispielsweise zehn Minuten aufrecht erhalten werden, während bisher die Röstung zwangsläufig zu einer Trocknung geführt hat, die zudem inhomogen über das Stückgut erfolgt ist. Durch die Erfindung wird die genaue Steuerung ermöglicht, was beispielsweise die Geschmacksentwicklung und das Aussehen, beispielsweise die Farbentwicklung sowie die Haltbarkeit, entscheidend beeinflusst. So kann zum Beispiel beim Rösten von Nüssen, beispielsweise Haselnüssen oder Erdnüssen, die Wunschfarbe durch genaue Steuerung der Trocknungsgeschwindigkeit und Endfeuchte erreicht werden.

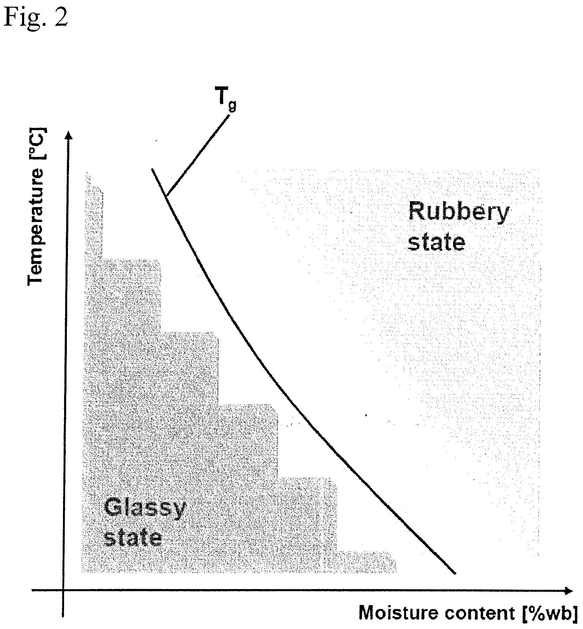

In verschiedenen Anwendungen ist die Wahl der sogenannten Glasübergangstemperatur T_{g} der zu behandelnden Produkte besonders vorteilhaft. Bei dieser Temperatur ändert sich die Verformungsfähigkeit der zu behandelnden Stückgüter. Unterhalb dieser Temperatur verhält sich das Material glasartig, also spröde, während es oberhalb dieser Temperatur viskoelastisch ist. Die Glasübergangstemperatur ändert sich, wie in Figur 2 gezeigt, abhängig von der Feuchtigkeit des Produkts. Die Wahl der Glasübergangstemperatur bei einer Wärmebehandlung führt zur Minimierung der intrazellulären Zerstörung von beispielsweise mindestens 25% bei Haselnüssen. Diese verringerte Zerstörung der zellulären Strukturen führt wiederum zu einer längeren Haltbarkeit, beispielsweise von einem Faktor 3 verglichen mit herkömmlichen Röstprozessen. Auch kann so eine geringere Fettmigration von beispielsweise Nüssen in Schokolade erreicht werden.

Im Einzelnen kann durch Zugabe von Dampf oder Wasser in die das zu behandelnde Gut umgebende Atmosphäre die Glasübergangstemperatur durch die höhere Energiedichte von feucht-warmer Luft schnell erreicht werden, ohne die Eigenschaften des Guts negativ zu beeinflussen.

Weiterhin besitzt das Produkt bei oder über der Glasübergangstemperatur eine "poröse Struktur", wodurch das Zurückhalten von Wasser in der Matrix des zu behandelnden Guts geschwächt ist und das Gut eine erhöhte Wasser-Durchlässigkeit aufweist.

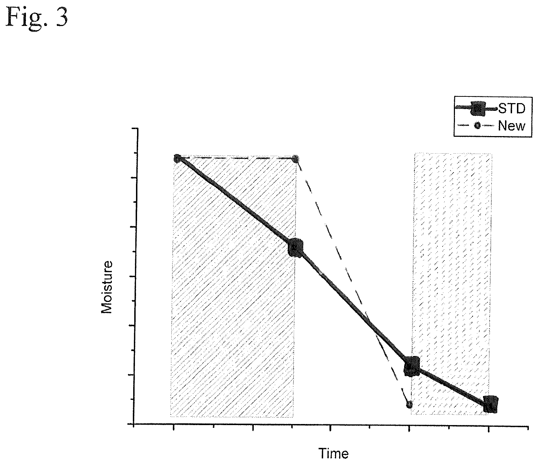

Fig. 3 zeigt den zeitlichen Verlauf der Feuchtigkeit innerhalb des zu behandelnden Stückguts während einer herkömmlichen Röstung (Kurve "STD") und einer Röstung unter Anwendung der vorliegenden Erfindung (Kurve "New"). Wie in Fig. 3 gezeigt, bleibt bei Anwendung des erfindungsgemäßen Verfahrens anfänglich (innerhalb des eingezeichneten schattierten Rechtecks) die Feuchtigkeit innerhalb des zu behandelnden Guts konstant, bis die Glasübergangstemperatur erreicht ist. Demgegenüber nimmt im Falle der herkömmlichen Röstung, bei der keine Zugabe von Wasserdampf erfolgt, die Feuchtigkeit im Lebensmittelprodukt kontinuierlich ab. Im Vergleich zu herkömmlichen Röstprozessen kann das gesamte Verfahren bei Verwendung der vorliegenden Erfindung insgesamt schneller durchgeführt werden, da zwar im ersten Schritt keine Trocknung stattfindet, aber das Röstgut schneller auf die Zieltemperatur gebracht werden kann. Die anschließende Trocknung kann aufgrund der Produkteigenschaften bei oder über der Glasübergangstemperatur schneller stattfinden, was durch das gemusterte Rechteck in Fig. 3 symbolisiert ist. Durch die erhöhte Wasser-Durchlässigkeit des Produkts kann die Trocknung schneller ohne strukturelle Schäden am Produkt erreicht werden.

Durch das Aufrechterhalten der Feuchtigkeit während der Röstung kann weiterhin die Rohmaterialtextur trotz des Röstens beibehalten werden, wodurch der Röstgeschmack bei gleichbleibender Textur der Produkte erreicht werden kann.

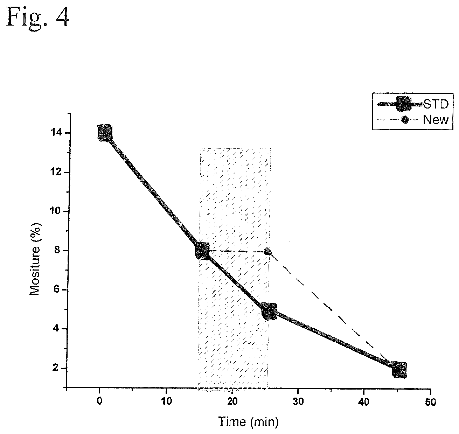

Weiterhin kann es vorteilhaft sein, eine Wärmehehandlung, insbesondere eine Röstung, bei einer bestimmten Temperatur und Feuchtigkeit für eine bestimmte definierte Zeitdauer durchzuführen. Dies ist beispielhaft in der Fig. 4 gezeigt. Hier wird ausgehend von einer Feuchtigkeit von etwa 14% die Temperatur zunächst erhöht, wobei gleichzeitig die Feuchtigkeit abnimmt. Gemäß einer Ausführungsform der Erfindung, die durch die mit "New" bezeichneten Kurve in Fig. 4 gezeigt ist, wird bei Erreichen der gewünschten Temperatur während der durch den Rahmen in Fig. 4 symbolisierten Zeitdauer der Wasser-Partialdruck, beispielsweise durch Zugaben von Wasser oder Wasserdampf in die Behandlungskammer so gesteuert, dass die Produktfeuchte bei gleichbleibender Temperatur konstant bleibt. Erst nach Ablauf der gewünschten Haltezeit findet, wie zuvor mit Bezug auf die Figur 3 beschrieben, die Trocknung statt. Gegenüber herkömmlichen Verfahren (Kurve "STD" in Fig. 4) bleibt während der Haltezeit bei Anwendung des erfindungsgemäßen Verfahrens nicht nur die Temperatur sondern auch die Produktfeuchte insgesamt und auch innerhalb der einzelnen Stückgüter konstant.

Beim Rösten bestimmter Produkte, beispielsweise Kaffee oder Getreide, können signifikante morphologische Änderungen in einem spezifischen Prozessschritt der Wärmebehandlung entstehen, die zu signifikanten Geschmacksänderungen führen, wie beispielsweise der sogenannte "crack" beim Rösten von Kaffee. Zudem besteht bei Röstprozessen, die mit einer exothermen Reaktion einhergehen, die Gefahr, dass Pyrolyse-Prozesse auftreten, die zu Ertragsverlust führen können ("black malt"). Auch eine solche Reaktion kann durch gezieltes Steuern des Wasser-Partialdrucks gemäß der vorliegenden Erfindung gesteuert, und mittels den gemäß der Erfindung eingesetzten Sensoren, insbesondere einem Dichtesensor, online überwacht und vermieden werden, was zu einer Steigerung des Ertrags führen kann.

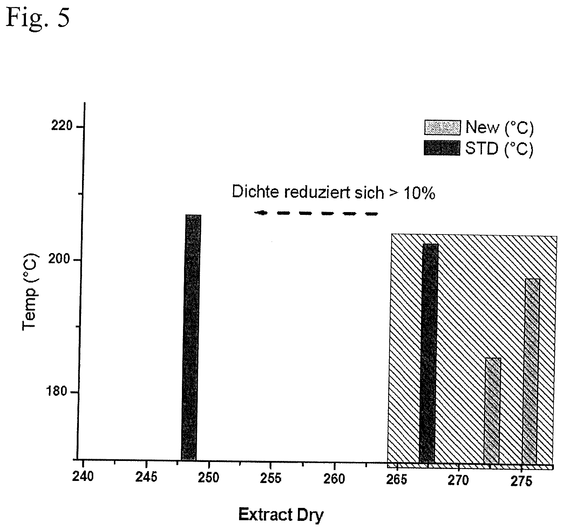

Fig. 5 illustriert den erreichten Ertrag ("Extract Dry") bei einer Röstung mit herkömmlichen Verfahren ("STD") und unter Anwendung eines erfindungsgemäßen Verfahrens ("New") bei Verwendung verschiedener Temperaturen. Der erwünschte Ertrag ist durch das schattierte Rechteck eingezeichnet. Bei herkömmlichen Verfahren ist der erzielte Ertrag nicht nur von der Zeitdauer der Behandlung sondern auch stark von der verwendeten Temperatur abhängig. Wie dargestellt kann bei herkömmlichen Verfahren bereits eine geringfügige Temperaturerhöhung von beispielsweise nur etwa 5 °C den Ertrag massiv vermindern. Dies hängt damit zusammen, dass bei höherer Temperatur die Gefahr des Auftretens einer Pyrolyse-Reaktion erhöht ist, die die betroffenen Güter unbrauchbar macht.

Dies kann durch die Steuerung des Wasser-Partialdrucks gemäß der vorliegenden Erfindung vermieden werden. Durch eine Behandlung in feuchter Atmosphäre kann die gewünschte Röstung auch bei deutlich unterschiedlichen Temperaturen durchgeführt werden, ohne wesentliche Einbußen beim Ertrag. Durch eine zusätzliche Überwachung der Dichte der Güter kann eine einsetzende Pyrolyse ferner erkannt und durch Erhöhen der Feuchtigkeit in der Behandlungskammer vermieden werden.

Ferner kann durch das erfindungsgemäße Verfahren eine präzise und schnelle Einstellung einer bestimmten Produkttemperatur ohne Feuchtigkeitsverlust dadurch erzielt werden, dass der Taupunkt genutzt wird, also die Bedingungen so eingestellt werden, dass bei der gewünschten Temperatur das Wasser kondensiert. Dies kann insbesondere bei Verfahren zur Haltbarmachung, also Pasteurisation und Sterilisation, von Bedeutung sein, bei denen sichergestellt werden muss, dass das gesamte Produkt ausreichend lang einer bestimmten Temperatur unterworfen wird. Durch die Anwendung feuchter Warmluft wird ein schnelles Übertragen von Energie auf das Gut ermöglicht. Dieser hohe Energieeintrag gewährleistet eine simultane homogene Temperatur innerhalb einer Behandlungskammer, die zur Steuerung des Röstprofils oder auch zur gezielten Entkeimung genutzt werden kann. Die Einstellung des Taupunkts kann bei konvektiver Röstung wie zuvor beschrieben über eine Dampfzugabe in den Heißluftstrom erfolgen. Durch eine entsprechende Wahl des Taupunkts bei beispielsweise 95 ± 5 °C für die Pasteurisation, so dass bei dieser Temperatur das Wasser kondensiert und der schnellere Wärmeübertrag stattfindet, ist sichergestellt, dass die gewünschte Temperatur auch im ganzen Stückgut herrscht. Hierdurch kann die lange Haltezeit herkömmlicher Verfahren vermieden werden, wo beispielsweise höhere Temperaturen für eine längere Zeit eingesetzt werden müssen, um das Erreichen der notwendigen Temperatur innerhalb des Stückguts sicher stellen zu können.

Die feuchtigkeitsbasierte Steuerung der Wärmebehandlungsprozesse, insbesondere der Röstprozesse, gemäß der vorliegenden Erfindung kann also zu einer besseren Haltbarkeit führen. Die Maillard-Reaktionen, die insbesondere für die Geschmacksentwicklung des Produkts entscheidend sind, können besser gesteuert werden. Ferner kann ein verbesserter Ertrag durch die Steuerung morphologischer Änderungen über die Kontrolle der Trocknung und Vermeidung von Pyrolyse-Prozessen erreicht werden. Weiterhin kann eine schnellere Röstung über die Nutzung einer höheren Energiedichte beim Aufwärmen und anschließender Trocknung bei Erreichen der Glasübergangstemperatur erreicht werden. Die Farbentwicklung des Produkts kann unabhängig von der Initialtemperatur kontrolliert werden und die Produkt-Wunschtemperatur kann ohne Trocknungseffekt eingestellt werden. Durch das Verfahren ist das Rösten von Produkten bei Beibehaltung der Rohwarentextur möglich, wodurch eine reduzierte Fettmigration, zum Beispiel in Schokolade durch schonendes Rösten erreicht werden kann.

Das Verfahren gemäß der vorliegenden Erfindung kann insbesondere in einer herkömmlichen Behandlungsvorrichtung durchgeführt werden, die eine Behandlungskammer, insbesondere eine Röstkammer oder Rösttrommel, einen Zuluftkanal zum Zuführen von Warmluft in die Behandlungskammer, einen Abluftkanal und eine Vorrichtung zum Zuführen von Dampf in den Zuluftkanal aufweist. Geeignet sind insbesondere beispielsweise die Produkte "Solano" oder "Tornado" der Bühler Barth GmbH. Die eingesetzte Vorrichtung muss ferner mindestens eine der folgenden Messeinrichtungen aufweisen:
eine Einrichtung zum Bestimmen der Dichte der Lebensmittelprodukte, insbesondere unter Verwendung von Mikrowellenstrahlung,
eine Einrichtung zum Bestimmen des Feuchtigkeitsgehalts der Lebensmittelprodukte, insbesondere unter Verwendung von Mikrowellenstrahlung,
eine Einrichtung zum Bestimmen der relativen Luftfeuchtigkeit in der Behandlungskammer, eine Einrichtung zum Bestimmen der Feuchtigkeit der Zuluft und
eine Einrichtung zum Bestimmen der Feuchtigkeit der Abluft.

Es muss also sichergestellt sein, dass eine entsprechende gesteuerte Dampfzufuhr ermöglicht ist und die Parameter zur Überwachung der Feuchtigkeit durch entsprechende Sensoren gemessen werden können.

## Patentansprüche

1. Verfahren zum Rösten von stückigen Lebensmittelprodukten, insbesondere von Kakao, Nüssen, wie Mandeln, Haselnüssen, Pekannüssen oder Walnüssen, Kaffee, Samen, Getreide, Malz, Erdnüssen, Kleien, Cerealien oder Ölsaaten wie Sonnenblumenkerne, wobei die Lebensmittelprodukte zum Rösten einer vorbestimmten Temperatur ausgesetzt werden, wobei der Wasser-Partialdruck in der Atmosphäre, in der sich die Lebensmittelprodukte während des Röstens befinden, derart gesteuert wird, dass sich während der Zeit des Röstens eine im Wesentlichen homogene Verteilung der Feuchtigkeit in den Lebensmittelprodukten ausbildet
wobei die Steuerung des Wasser-Partialdrucks durch gezielte Zugabe von Dampf in die Atmosphäre erfolgt,
wobei die Feuchtigkeit des Stückguts während dem Rösten bestimmt wird und
wobei die Feuchtigkeit und damit der Wasser-Partialdruck in der Atmosphäre erhöht wird, wenn bestimmt wird, dass die Feuchtigkeit des Stückguts abnimmt.

2. Verfahren nach Anspruch 1, wobei der Wasser-Partialdruck derart eingestellt wird, dass während des Röstens ein gezieltes Entweichen von Feuchtigkeit aus den Lebensmittelprodukten eingestellt werden kann.

3. Verfahren nach mindestens einem der vorstehenden Ansprüche, wobei zum Erreichen und/oder Aufrechterhalten der vorbestimmten Temperatur Warmluft in die Atmosphäre zugeführt wird, wobei die Steuerung des Wasser-Partialdrucks insbesondere auf der Basis der Feuchtigkeit der Zuluft und/oder der Abluft des Warmluftstroms erfolgt.

4. Verfahren nach mindestens einem der vorstehenden Ansprüche, wobei Zugabe von Dampf in die Atmosphäre zur Steuerung des Wasser-Partialdrucks vor und/oder während des Röstens erfolgt.

5. Verfahren nach mindestens einem der vorstehenden Ansprüche, wobei während des Röstens eine im Wesentlichen homogene Verteilung der Temperatur in den Lebensmittelprodukten, insbesondere eine Temperatur von 90 °C bis 230 °C, herrscht.

6. Verfahren nach Anspruch 5, wobei die während des Röstens aufrechterhaltene Temperatur die Taupunkttemperatur oder die Glasübergangstemperatur der Lebensmittelprodukte ist.

7. Verfahren nach mindestens einem der vorstehenden Ansprüche, wobei die Dauer des Röstens auf der Basis einer Dichtemessung der Lebensmittelprodukte gesteuert wird.

8. Verfahren nach mindestens einem der vorstehenden Ansprüche, wobei nach dem Rösten eine Trocknung der Lebensmittelprodukte erfolgt, wobei der Wasser-Partialdruck in der Atmosphäre während der Trocknung vorzugsweise geringer ist, als der Wasser-Partialdruck in der Atmosphäre während des Röstens.

9. Verfahren nach mindestens einem der vorstehenden Ansprüche, wobei nach dem Rösten eine Trocknung der Lebensmittelprodukte erfolgt, wobei der Wasser-Partialdruck in der Atmosphäre während der Trocknung auf der Basis der Dichteänderung der Lebensmittelprodukte gesteuert wird.

## Claims

1. A method for roasting of bulky food products, in particular cocoa, nuts, like almonds, hazelnuts, pecans or walnuts, coffee, seeds, cereals, malt, peanuts, brans, grains or oilseeds such as sunflower seeds,
wherein the food products are subjected to a certain temperature for roasting, wherein the partial pressure of water in the atmosphere where the food products are located during the roasting is controlled such that a substantially homogeneous moisture distribution occurs in the food products during the duration of the roasting, wherein the control of the partial pressure of the water takes place by deliberately supplying vapour to the atmosphere,
wherein the moisture of the bulk is determined during roasting and
wherein the moisture and thus the partial pressure of the water is increased in the atmosphere when it is determined that the moisture of the bulk decreases.

2. The method according to claim 1, wherein the partial pressure of water can be adjusted such that during the roasting a deliberate moisture escape from the food products can be adjusted.

3. The method according to at least one of the preceding claims, wherein hot air is supplied to the atmosphere to achieve and/or maintain the predetermined temperature, wherein the partial pressure of the water is controlled in particular on the basis of the moisture of the supply air and/or the exhaust air of the hot air stream.

4. The method according to at least one of the preceding claims, wherein moisture is supplied to the atmosphere to control the partial pressure of water before and/or during the roasting.

5. The method according to at least one of the preceding claims, wherein, during the roasting, a substantially homogeneous distribution of the temperature in the food products prevails, in particular a temperature of 90°C to 230°C.

6. The method according to claim 5, wherein the temperature maintained during the roasting is the dew point temperature or the glass transition temperature of the food products.

7. The method according to at least one of the preceding claims, wherein the duration of the roasting is controlled on the basis of a density measurement of the food products.

8. The method according to at least one of the preceding claims, wherein the food products are dried after the roasting, wherein the partial pressure of water in the atmosphere is preferably lower during the drying than the partial pressure of water in the atmosphere during the roasting.

9. The method according to at least one of the preceding claims, wherein the food products are dried after the roasting, wherein the partial pressure of the water in the atmosphere is controlled during the drying on the basis of the density change in the food products.

## Revendications

1. Procédé pour la torréfaction de produits alimentaires en morceaux, en particulier cacao, noix telles qu'amandes, noisettes, noix de pécan ou noix, café, graines, blé, malt, cacahuètes, son, céréales ou graines oléagineuses telles que graines de tournesol,
dans lequel les produits alimentaires sont soumis à une température prédéterminée pour la torréfaction, dans lequel la pression partielle d'eau dans l'atmosphère dans laquelle les produits alimentaires sont placés pendant la torréfaction est commandée de telle sorte que, pendant la durée de la torréfaction, une répartition sensiblement homogène de l'humidité se forme dans les produits alimentaires
dans lequel la commande de la pression partielle d'eau est effectuée par l'ajout ciblé de vapeur dans l'atmosphère,
dans lequel l'humidité du produit en morceaux est déterminée pendant la torréfaction et
dans lequel l'humidité, et donc la pression partielle d'eau dans l'atmosphère, est augmentée lorsqu'il est déterminé que l'humidité du produit en morceaux diminue.

2. Procédé selon la revendication 1, dans lequel la pression partielle d'eau est réglée de telle sorte qu'une évacuation ciblée de l'humidité des produits alimentaires peut être réglée pendant la torréfaction.

3. Procédé selon au moins l'une des revendications précédentes, dans lequel de l'air chaud est introduit dans l'atmosphère pour atteindre et/ou maintenir la température prédéterminée, dans lequel la commande de la pression partielle d'eau est effectuée en particulier d'une manière basée sur l'humidité de l'air d'alimentation et/ou de l'air d'évacuation du flux d'air chaud.

4. Procédé selon au moins l'une des revendications précédentes, dans lequel un ajout de vapeur dans l'atmosphère est effectué pour commander la pression partielle d'eau avant et/ou pendant la torréfaction.

5. Procédé selon au moins l'une des revendications précédentes, dans lequel, pendant la torréfaction, la température est répartie de manière sensiblement homogène dans les produits alimentaires, en particulier à une température allant de 90 °C à 230 °C.

6. Procédé selon la revendication 5, dans lequel la température maintenue pendant la torréfaction est la température de point de rosée ou la température de transition vitreuse des produits alimentaires.

7. Procédé selon au moins l'une des revendications précédentes, dans lequel la durée de la torréfaction est commandée sur la base d'une mesure de densité des produits alimentaires.

8. Procédé selon au moins l'une des revendications précédentes, dans lequel un séchage des produits alimentaires est effectué après la torréfaction, dans lequel la pression partielle d'eau dans l'atmosphère pendant le séchage est de préférence inférieure à la pression partielle d'eau dans l'atmosphère pendant la torréfaction.

9. Procédé selon au moins l'une des revendications précédentes, dans lequel un séchage des produits alimentaires est effectué après la torréfaction, dans lequel la pression partielle d'eau dans l'atmosphère pendant le séchage est commandée sur la base du changement de densité des produits alimentaires.
